# EUROPÄISCHE PATENTSCHRIFT

(11) **EP 2 464 546 B1**
(45) Veröffentlichungstag und Bekanntmachung des Hinweises auf die Patenterteilung: **24.04.2013**
(21) Anmeldenummer: 10747795.2
(22) Anmeldetag: 16.07.2010
(51) Int. Cl.: B60R 21/0136

(54) **VERFAHREN UND EINHEIT ZUR SIGNALVERARBEITUNG VON KÖRPERSCHALLSIGNALEN ZUR UNFALLDETEKTION**
METHOD AND UNIT FOR SIGNAL PROCESSING OF IMPACT SOUND FOR DETEKTING A CRASH
MÉTHODE ET DISPOSITIF POUR TRAITEMENT DE SIGNAL DE BRUITS CORPORELS POUR DÉTECTER UN COLLISION

(30) Priorität: 14.08.2009 DE 102009037619
(43) Veröffentlichungstag der Anmeldung: 20.06.2012
(73) Patentinhaber: Continental Automotive GmbH, 30165 Hannover (DE)
(72) Erfinder: SMYKALLA, Christian, 82140 Olching (DE)
(74) Vertreter: Büchner, Jörg
(86) Internationale Anmeldenummer: PCT/DE2010/000821
(87) Internationale Veröffentlichungsnummer: WO 2011/018066

(56) Entgegenhaltungen:
- WO-A1-2006/125719
- WO-A1-2007/082865
- DE-A1- 10 015 273
- DE-A1-102005 026 188
- DE-A1-102006 040 653
- DE-A1-102007 008 379

## Beschreibung

Die Erfindung betrifft ein Verfahren zur Signalverarbeitung von Körperschallsignalen, insbesondere in Kraftfahrzeugen gemäß dem Oberbegriff von Anspruch 1 sowie ein Insassenschutzsystem mit entsprechender Signalverarbeitungseinheit.

Bei der Erkennung von Unfallsituationen von Personenkraftwagen stellt die Körperschallmessung eine neue Technologie dar. Das Airbagsteuergerät wertet die in einem Crash entstehenden Struktur- bzw. Körperschallschwingungen aus und ermöglicht eine schnelle, zielgerichtete Auslösung der Rückhaltemittel.

So wird beispielsweise in der DE 10015273 A1 bereits die Auswertung von Körperschall als hochfrequente Schwingungen von einem breitbandigen Sensor erfasst und daraus ein niederfrequenter Beschleunigungs- und ein hochfrequenter Körperschallsignalanteil generiert. Frequenzen oberhalb 4 kHz sollen dabei von einem Hochpass in den Auswertepfad für das Körperschallsignal durchgelassen werden. Der Durchlassbereich einen Hochpassfilters setzt bei einfachen Filtern jedoch eine -3dB-Eckfrequenz von bei oder unter 4kHz voraus, da ansonsten das Signal bereits deutlich gedämpft wäre. Oder es müssten deutlich aufwändigere Hochpassfilter hoher Ordnung eingesetzt werden.

Die bisherige Filterung von Körperschallsignalen erfolgt in der Regel über Bandpass, Gleichrichtung und Tiefpass und hat einige weitere Nachteile. Dazu zählt die relativ lange Filterzeit im Sensor, die gerade bei schnell auszulösenden Seitenaufprall-Tests ein Problem sein kann. Durch den Tiefpass in der aktuellen Signalverarbeitung wird ein Signal zusätzlich verzögert. Die ganze Filterkette hat zur Folge, dass ein hochfrequentes Signal verzögert, und nur sehr stark geglättet in die Auswertelogik eines Insassenschutzsystems ankommt.

Die Aufgabe der vorliegenden Erfindung ist es daher, das Insassenschutzsystem sowie das Verfahren zur Signalverarbeitung so weiterzuentwickeln, dass eine schnellere Erkennung von Auslösefällen möglich ist, ohne dass die Gefahr von Fehlauslösungen erhöht wird.

Diese Aufgabe wird durch die Merkmale der unabhängigen Ansprüche gelöst. Vorteilhafte Weiterbildungen der Erfindung ergeben sind aus den Unteransprüchen, wobei auch Kombinationen und Weiterbildungen einzelner Merkmale miteinander denkbar sind.

Ein wesentlicher Gedanke der Erfindung besteht darin, dass ein Hochpass erster Ordnung verwendet wird, der eine deutlich geringere Signalverzögerung aufweist.

Zudem wird die -3dB-Eckfrequenz innerhalb des Arbeitsfrequenzbereichs, d.h. also oberhalb der unteren Arbeitsfrequenz gelegt. Das hat zur Folge, dass eben Frequenzanteile an dieser 3dB-Eckfrequenz bereits mit -3dB gedämpft werden, niedrigere Frequenzen im Arbeitsbereich noch stärker, hochfrequentere Anteile jedoch weniger stark gedämpft und damit eine ungleiche Gewichtung zwischen den Frequenzanteilen innerhalb des Arbeitsbereichs erfolgt. Dem liegt die Erkenntnis zugrunde, dass die Frequenz eines Signals in dessen Energie eigentlich quadratisch eingeht. Als besonders vorteilhaft hat sich erwiesen, die -3dB-Eckfrequenz in die obere Hälfte oder sogar das obere Drittel des Arbeitsfrequenzbereichs zu legen. Der Arbeitsfrequenzbereich wird dabei nach unten durch die immer zunehmende Dämpfung des Hochpasses bestimmt und nach oben durch die Abtastrate bzw. vorzugsweise einen sehr hochfrequenten Anti-Alias-Filter begrenzt.

Durch diese technisch einfach realisierbare Dimensionierung des Filters und Ausrichtung der Eckfrequenz kann sichergestellt werden, dass Auslösefälle zwar zu einer deutlich schnelleren Auslöseentscheidung in der Signalverarbeitungseinheit führen, Nichtauslösefälle aber hinreichend unterschieden werden können.

Die Beschränkung des Arbeitsbereichs nach unten erfolgt damit im wesentlichen durch den Hochpass, die Beschränkung des Arbeitsbereichs nach oben, also die obere Frequenz des Arbeitsbereichs kann insbesondere durch die Abtastfrequenz der Analog-Digitalwandlung erfolgen, wobei dieses A/D-Wandlung vor oder auch nach der Filterung erfolgen kann, d.h. die Filterung analog oder digital ausgeführt sein kann.

Die Erfindung wird nun nachfolgend anhand eines Ausführungsbeispieles unter Zuhilfenahme der Figuren näher erläutert. Im Folgenden können für funktional gleiche und/oder gleiche Elemente mit den gleichen Bezugsziffern bezeichnet sein. Es zeigen
- Fig. 1:: Körperschallrohsignal sowie nach dem herkömmlichen sowie dem erfindungsgemäßen Verfahren gefiltertes Signal im Vergleich
- Fig. 2:: gefilterte Signale für einen Nichtauslösefall im Vergleich zueinander
- Fig. 3: gefilterte Signale für einen Nichtauslösefall im Vergleich zueinander
- Fig. 4: Frequenzgang des erfindungsgemäßen Filters

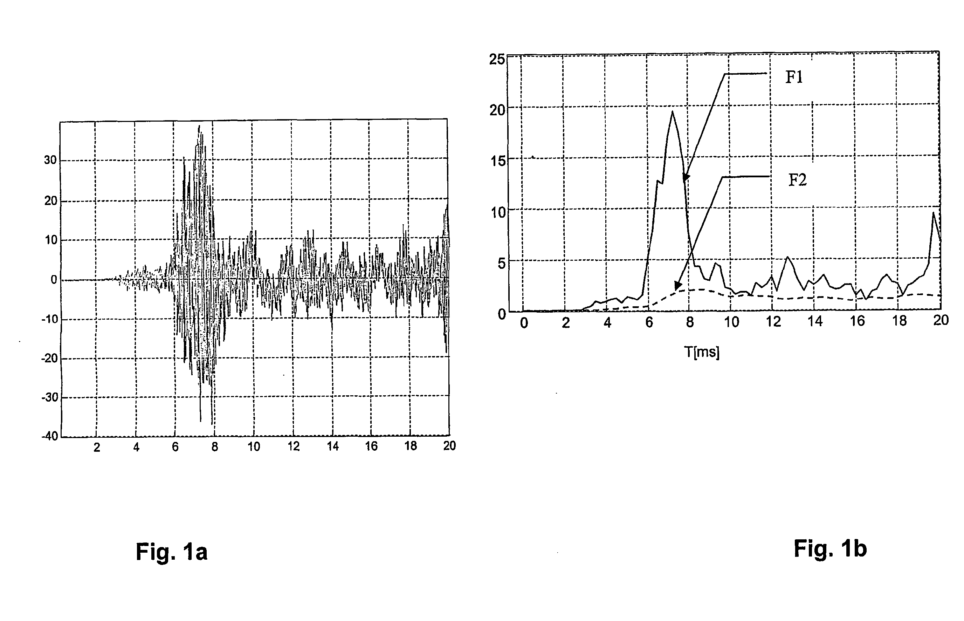

Fig. 1a zeigt das Körperschallrohsignal ungefiltert. Fig. 1 b skizziert im Vergleich dazu das jeweils daraus gewonnene Energiesignal nach Filterung einmal mit dem herkömmlichen Verfahren (gestrichelte Linie F2) als auch mit dem erfindungsgemäß vorgeschlagenen Hochpassfilter (durchgezogene Linie F1). Deutlich erkennbar ist in diesem Vergleich, dass das Energiesignal deutlich besser die Einhüllende des Körperschallrohsignals repräsentiert, als dass dies die herkömmlichen Verfahren können.

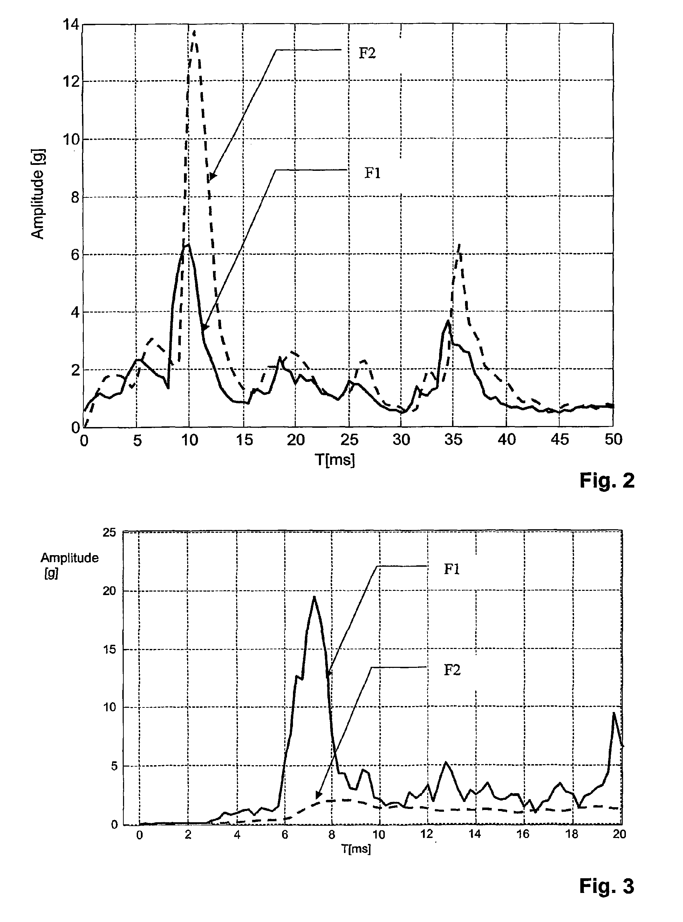

Fig. 3 zeigt in einer besseren Auflösung die Fig. 1 b. Deutlich erkennbar bietet die Filterung mit dem Hochpass (durchgezogene Linie F1) bereits ein sehr starkes erstes lokales Maximum, bei dessen Integration eine Auslöseschwelle recht frühzeitig überschritten wird, während beim Signal F2 das Maximum demgegenüber deutlich schwächer und zudem verzögert auftritt.

Während die höhere Empfindlichkeit bei Auslösefällen noch nicht sonderlich überraschend sein mag, so wird die besondere Wirkung des erfindungsgemäßen Filterverfahrens aber in Fig. 2 am Beispiel eines Nichtauslösefalls, beispielsweise eines seitlichen Bordsteinremplers deutlich. So ist nämlich bei Nichtauslösefällen die Energie des Körperschallsignals in der Anfangsphase insgesamt auch vergleichbar hoch, jedoch ist die Frequenzverteilung abweichend. So sind bei Nichtauslösefällen niederfrequente Anteile maßgeblich für die zunächst sichtbare hohe Körperschallenergie.

Indem der Hochpassfilter jedoch so dimensioniert ist, dass er innerhalb des auszuwertenden Arbeitsfrequenzbereichs eben nicht konstant ist, sondern niederfrequente Anteile dort spürbar dämpft, kommt es zu einer Verbesserung auch bei den Nichtauslösefällen. So nimmt die bewertete Energie beim Hochpass (durchgezogene Linie F1) zwar wieder früher zu, ist jedoch deutlich niedriger als beim herkömmlichen Filter (gestrichelte Linie F2).

Dies liegt daran, weil der Filter ein Hochpass erster Ordnung ist und dessen -3dB-Eckfrequenz oberhalb der unteren Arbeitsfrequenz, vorzugsweise zwischen der unteren und oberen Arbeitsfrequenz liegt.

Damit werden die bei Nichtauslösefällen häufig auftretenden Arbeitsfrequenzen unterhalb der -3dB-Eckfrequenz mit 3dB und mehr gedämpft, während die energiestärkeren und bei Auslösefällen auftretenden höheren Frequenzen kaum gedämpft werden.

In einem Ausführungsbeispiel liegt die untere und obere Arbeitsfrequenz zwischen 2,5 kHz und 15 KHz, vorzugsweise zwischen 5 kHz und 10 kHz und die -3dB-Eckfrequenz zwischen 5 kHz und 10 kHz, vorzugsweise bei näherungsweise 7 kHz. Diese Werte sind jedoch von Fahrzeugtyp zu Fahrzeugtyp unterschiedlich, da die Unterschiede in der Fahrzeugmasse, Federung und Dämpfung sowie Karosseriesteifigkeit auch zu einem abweichenden Schwingungsverhalten und einer abweichenden Körperschallsignalcharakteristik führen.

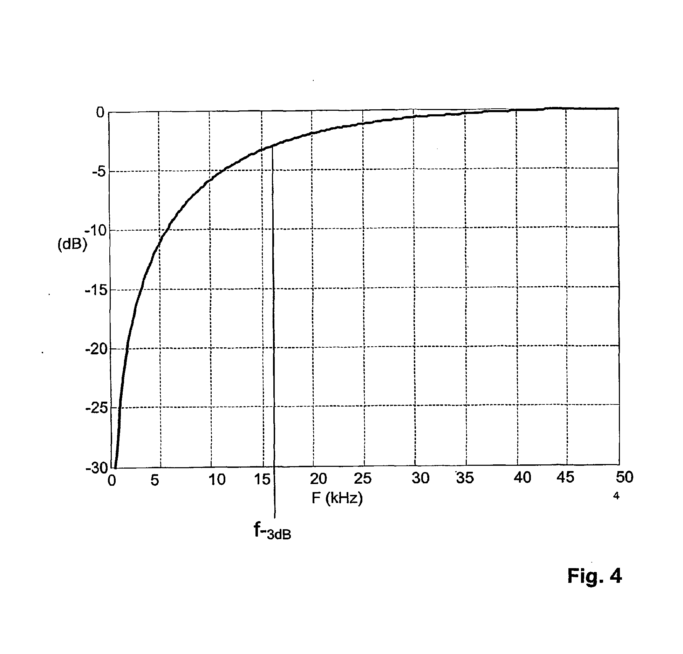

In einem anderen Ausführungsbeispiel liegt die untere und obere Arbeitsfrequenz zwischen 2,5 kHz und 25 KHz, vorzugsweise zwischen 5 und 18 kHz und die 3dB-Eckfrequenz zwischen 8 kHz und 18 kHz, vorzugsweise bei näherungsweise 16 kHz. Bei diesem Ausführungsbeispiel wirkt die Dämpfung der niederfrequenten Anteile des Körperschalls im Arbeitsbereich noch stärker, bspw. bei 5 kHz bereits -12dB wie dies Fig. 4 anhand eines solchen Frequenzgangs noch einmal skizziert.

Um Einflüsse des niederfrequenten Signalbereichs besonders klein zu halten und so Resonanzfrequenzen der Fahrzeugstruktur sowie des Gehäuses, in dem der Sensor sich befinden soll, in der Signalauswertung zu vermeiden, wird die Energie des Signals, das in die Auswertung gelangt, also nach Frequenzen durch eine ungleiche, also nicht konstante Gewichtung bewertet.

Es haben Signale mit höherem Frequenzgehalt bei gleicher Amplitude im Zeitbereich mehr Energie. Daher wird ein Signal, dass höhere Frequenzanteile enthält über die Filtercharakteristik quantitativ mehr Einfluss haben als ein Signal mit geringerer Frequenz. Ab einem bestimmten Frequenzbereich ist der Einfluss hochfrequenter Signalanteile aufgrund der Dämpfung des Signals bei der Übertragung ins Gehäuse des Sensors zu vernachlässigen, was eine obere Grenzfrequenz in der Praxis häufig erübrigt. Alternativ könnte erforderlichenfalls noch ein Tiefpass mit einer Eckfrequenz oberhalb des Arbeitsbereichs eingesetzt werden, vorzugsweise nur adaptiv bei besonders hochfrequenten Signalen zugeschaltet werden.

Nach der Filterung kann sich eine sprunghafte Mittelwertbildung anschließen. Diese vereint die Absolutwertbildung, die Filterung des Signals und Dezimierung des Signals auf 4 kHz.

Dabei ist vorzugsweise darauf zu achten, dass die Datenrate des ursprünglichen Signals durch Summieren einer bestimmten Anzahl von Werten auf eine für die Signalverarbeitung der Beschleunigungssignale vorgesehene Frequenz, beispielsweise 4 Werte pro Millisekunde (4 kHz) dezimiert wird. Die Architektur der Filterkette kann sowohl analog, als auch digital erfolgen.

Durch das erfindungsgemäße Verfahren sowie ein entsprechendes Insassenschutzsystem wird eine verbesserte Bewertung des Frequenzgehaltes des Signals erreicht. Durch die Verwendung einer sehr flachen Flanke erster Ordnung werden niederfrequente Signale geringer bewertet als hochfrequente. So findet eine energetisch korrektere Bewertung des Frequenzgehalts der Signale statt. Die Filterung ist sehr einfach und daher günstig realisierbar und verbraucht wenig Platz auf dem ASIC des Sensors. Zudem werden die Filterzeiten durch Filter erster Ordnung in Verbindung mit sprunghafter Mittelwertbildung geringer gegenüber einem Tiefpassfilter. Gerade im Bereich des Seitencrashs ergeben sich durch die bessere Nachbildung der Originalsignals Vorteile zur frühzeitigen Erkennung von Crashs und zur Unterscheidung von Nichtauslöse- Fällen.

Durch die Frequenzbewertung des Signals über das Gesamtband werden außerdem Signalanteile in Crashs auswertbar, die bisher dem sehr starken Filter zum Opfer gefallen sind. Dies äußert sich sowohl in frontalen Crashdaten als auch in Seitencrash Daten. In der Fig. 1 der Seitencrashdaten im gefilterten (neuer & bisheriger Filter) und im Rohzustand fällt auf, wie stark die Signale mit der bisherigen Filterung geglättet wurden und wie im Vergleich dazu die neue Filterung kurze hochfrequente Signalanstiege im Signal deutlich besser bewerten kann.

Weiterhin ist es über verbesserte Energiebewertung im Signal möglich, Nichtauslösefälle, die oft eine höhere Energie im niedrigen Frequenzbereich besitzen, im Vergleich zu Crashtests besser zu erkennen.

## Patentansprüche

1. Verfahren zur Signalverarbeitung von Körperschallsignalen, insbesondere in Kraftfahrzeugen, wobei der Körperschall gemessen und von einem Filter ein Frequenzanteil des Körperschalls bereitgestellt und dieser Frequenzanteil zwischen einer unteren und einer oberen Arbeitsfrequenz ausgewertet wird, **dadurch gekennzeichnet, dass** der Filter ein Hochpass erster Ordnung ist, wobei dessen -3dB-Eckfrequenz zwischen der unteren und oberen Arbeitsfrequenz liegt.

2. Verfahren nach Anspruch 1, **dadurch gekennzeichnet, dass** eine ungleiche Gewichtung zwischen den Frequenzanteilen innerhalb des Arbeitsbereichs erfolgt, insbesondere Frequenzen im Arbeitsbereich, aber unter dieser -3dB-Eckfrequenz stärker als -3dB gedämpft werden und Frequenzen im Arbeitsbereich über dieser -3dB-Eckfrequenz weniger stark als -3dB gedämpft werden.

3. Verfahren nach Anspruch 1 oder 2, **dadurch gekennzeichnet, dass** die 3dB-Eckfrequenz in der oberen Hälfte zwischen der unteren und oberen Arbeitsfrequenz liegt.

4. Verfahren nach einem der vorangehenden Ansprüche, **dadurch gekennzeichnet, dass** untere und obere Arbeitsfrequenz zwischen 2,5 und 25 KHz, vorzugsweise zwischen 5 und 18 kHz liegt.

5. Verfahren nach einem der vorangehenden Ansprüche, **dadurch gekennzeichnet, dass** die -3dB-Eckfrequenz zwischen 8 und 18 kHz, vorzugsweise bei näherungsweise bei 16 kHz liegt.

6. Insassenschutzsystem mit einem Sensor, der zumindest für Körperschallsignale empfindlich ist, und einer Signalauswerteeinheit mit einem Filter zur Durchführung des Verfahrens nach einem der vorangehenden Ansprüche, dergestalt, dass durch den Sensor der Körperschall gemessen und von dem Filter der Signalauswerteeinheit ein Frequenzanteil des Körperschalls bereitgestellt und dieser Frequenzanteil zwischen einer unteren und einer oberen Arbeitsfrequenz ausgewertet wird, wobei der Filter ein Hochpass erster Ordnung ist, wobei dessen -3dB-Eckfrequenz zwischen der unteren und oberen Arbeitsfrequenz liegt.

## Claims

1. A method for signal processing of structure-borne sound signals, in particular in motor vehicles, wherein the structure-borne sound is measured and a frequency component of the structure-borne sound is provided by a filter and such frequency component is evaluated between a lower and an upper operating frequency, **characterized in that** said filter is a first-order high-pass, wherein the -3 dB cut-off frequency thereof is between the lower and upper operating frequencies.

2. A method according to claim 1, **characterized in that** an unequal weighting occurs between the frequency components within the operating range, in particular frequencies in the operating range, but below such -3 dB cut-off frequency are attenuated more than -3 dB, and frequencies in the operating range above such -3 dB cut-off frequency are attenuated less than -3 dB.

3. A method according to claim 1 or 2, **characterized in that** the 3 dB cut-off frequency is in the upper half between the lower and upper operating frequencies.

4. A method according to any one of the preceding claims, **characterized in that** the lower and upper operating frequencies range between 2.5 and 25 kHz, preferably between 5 and 18 kHz.

5. A method according to any one of the preceding claims, **characterized in that** the -3 dB cut-off frequency ranges between 8 and 18 kHz, is preferably approximately 16 kHz.

6. A passenger protection system having a sensor, which is at least sensitive to structure-borne sound signals, and a signal evaluation unit having a filter for carrying out the method according to any one of the preceding claims, such that the structure-borne sound is measured by the sensor and a frequency component of the structure-borne sound is provided by the filter of the signal evaluation unit and such frequency component is evaluated between a lower and an upper operating frequency, wherein said filter is a first-order high-pass, wherein the -3 dB cut-off frequency thereof is between the lower and upper operating frequencies.

## Revendications

1. Procédé de traitement de signaux de bruit de structure, en particulier dans les véhicules automobiles, dans lequel le bruit de structure est mesuré et un composant de fréquence du bruit de structure est mis à disposition par un filtre et ce composant de fréquence est évalué entre une fréquence de travail inférieure et une fréquence de travail supérieure, **caractérisé en ce que** le filtre est un passe-haut de premier ordre, dans lequel la fréquence de coupure de -3 dB de celui-ci est située entre les fréquences de travail inférieure et supérieure.

2. Procédé selon la revendication 1, **caractérisé en ce qu'**une pondération inégale est effectuée entre les composants de fréquence à l'intérieur de la plage d'opération, en particulier les fréquences dans la plage d'opération, mais au-dessous de cette fréquence de coupure de -3 dB sont atténuées plus fortement que -3 dB et les fréquences dans la plage d'opération au-dessus de cette fréquence de coupure de -3 dB sont atténuées moins fortement que -3 dB.

3. Procédé selon la revendication 1 ou 2, **caractérisé en ce que** la fréquence de coupure de 3 dB est située dans la moitié supérieure entre les fréquences inférieure et supérieure.

4. Procédé selon l'une quelconque des revendications précédentes, **caractérisé en ce que** les fréquences de travail inférieure et supérieure sont comprises entre 2,5 et 25 kHz, de préférence entre 5 et 18 kHz.

5. Procédé selon l'une quelconque des revendications précédentes, **caractérisé en ce que** la fréquence de coupure de -3dB est comprise entre 8 et 18 kHz, est de préférence approximativement de 16 kHz.

6. Système de protection des passagers avec un détecteur qui est au moins sensible aux signaux de bruit de structure et une unité d'évaluation des signaux avec un filtre pour la mise en oeuvre du procédé selon l'une quelconque des revendications précédentes, de telle manière que le bruit de structure et mesuré par le détecteur et un composant de fréquence du bruit de structure est mis à disposition par le filtre de l'unité d'évaluation des signaux et ce composant de fréquence est évalué entre une fréquence de travail inférieure et une fréquence de travail supérieure, dans lequel ledit filtre est un passe-haut de premier ordre, dans lequel la fréquence de coupure de -3 dB de celui-ci est située entre les fréquences de travail inférieure et supérieure.
